# EUROPEAN PATENT APPLICATION

(11) **EP 1 670 247 A2**
(43) Date of publication of application: **14.06.2006**
(21) Application number: 06075541.0
(22) Date of filing: 11.02.2002
(51) Int. Cl.: H04N 7/10, H04N 7/173, H04L 29/06, H04L 12/24

(54) **Distribution and networking of television, video and other signals**

(30) Priority: 09.02.2001 WO PCT/GB01/00533; 13.11.2001 GB 0127249
(62) Divisional of application: 02711055.0
(71) Applicant: Quadriga Technology Limited, London W4 4AL (GB)
(72) Inventor: Garstone, Adam Jarvis, Cambridge CB1 3BY (GB); Plimmer, Colin Donald, Melbourne Royston, Herts SG11 6NG (GB); Jamieson, Ian Laurence, Cherry Hinton Cambridge CB1 9LZ (GB); Fisk, Julian Basil, Histon Cambridge CB4 9JA (GB); Austin, Terry Alan, Barnham Wokingham, Berks RG41 4TN (GB); Kotak, Kaushik, Cambridge, CB1 1QE (GB)
(74) Representative: Hyden, Martin Douglas

(57) **Abstract**

A system for distributing audio/visual (AV) signals to different locations comprises a server capable of providing digital AV signals for a plurality of programmes, a plurality of receivers each at a respective location, and a network connecting the server to the receivers, each receiver being operable to select a required one of the programmes and to communicate the selection to the server, the server being responsive to such a selection to transmit the digital AV signal for the selected programme over the network addressed to the receiver that selected that programme, and each receiver being responsive to the AV signal that is addressed to that receiver so that point to-point communication is established from the server to that receiver.

## Description

### Technical field

This invention relates to distribution and networking of television, video and other signals, installation of such distribution systems, and control of television sets.

Certain aspects of this invention find particular application in a media distribution/networking system for use in a hotel. It will be understood, however, that the invention can also be applied to other distribution/networking systems. Likewise, as used herein, the term "hotel" is preferably to be understood as encompassing any form of establishment where guests are temporarily allocated a room or similar or part thereof, whether for payment or not.

### Background art

In a traditional hotel media distribution system, different media services, such as television programmes, radio programmes and movies are broadcast around the hotel using a distribution network of coaxial cable. Each service is provided on the coaxial cable as an analogue signal with a different channel frequency, and the receiving equipment (such as a television) in each hotel room can be tuned to the required channel to receive the desired service.

Similarly, in the cable distribution of television signals to dwellings in a neighbourhood ("cable television"), each programme is provided on the cable as a signal with a different channel frequency, and the receiving equipment in each dwelling can be tuned to the required channel to receive the desired programme.

Low-grade coaxial cable (such as RG59 cable) that has traditionally been used in hotel distribution networks has a typical bandwidth of 460 MHz. An analogue television signal occupies a bandwidth of 6 MHz. There is therefore a limit of about seventy-six channels that can be used in such a system. There is a desire to increase the range of services that are available to each hotel room or dwelling and to facilitate the provision of room-specific or dwelling-specific services.

In the following, references are made to a server, a receiver, a network, a conductor, a 2-way amplifier, a first circuit board, and a second circuit board. Such a server may alternatively be replaced by a means for providing signals, preferably digital television/video/radio/audio signals; such a receiver may alternatively be replaced by a means for receiving signals, preferably digital television/video/radio/audio signals; such a network may alternatively be replaced by a means for connecting a server to receivers, or for connecting the providing means to the receiving means; such a conductor may alternatively be replaced by a means for carrying a plurality of signals ; such a 2-way amplifier may alternatively be replaced by a means for amplifying/maintaining the signal level of signals; such a first circuit board may alternatively be replaced by a first control means; and such a second circuit board may alternatively be replaced by a second control means.

Any reference to signals shall be taken to include any kind of audio, visual or other information signals. Specifically, references to television/video/radio/audio signals shall include any of : television signals, video signals, radio signals or audio signals, either individually or in any combination. Signals may be analogue or digital, and digital signals may be encoded in formats other than those referred to in the embodiments described. Specifically, digital audio and visual signals may be encoded in MP3 or MPEG formats or in any other suitable format.

### Disclosure of the invention

This invention provides systems and methods for distributing audio/visual (AV) signals via a digital point-to-point network as set forth in the accompanying claims.

By providing the services by way of digital, rather than analogue, signals, and using a digital point-to-point network (for example using a switched internet protocol (IP)) between one or more servers and the receivers, the modern requirements for such a system can more easily be met.

A bandwidth to each receiver of 10 Mbps is sufficient for video, and therefore in one embodiment of the invention a substantial part of a cable run of the network from the server to the receivers may be provided by data grade twisted-pair cable, such as twisted-pair cable that substantially complies with or exceeds the specification of ANSI/EIA/TIA-568-1991, Category 3, and more preferably complies with or exceeds the specification of Category 5, i.e. that type of cable currently normally used for 10baseT or100baseT computer networks.

The installation of such cabling and any necessary switches in a new hotel would not cause a problem. However, the installation of such cabling into an existing hotel may in many instances be difficult, expensive and inconvenient. Nevertheless, most hotels have a telephone system, with a telephone in each room. Telephone-grade twisted pair cabling is not designed for use in an AV (e.g. television/video/radio/audio) network and is of inferior quality to standard network cable (Category 5), but it has been realised that it can be used for the transmission of digital AV signals in a controlled environment such as a hotel.

Accordingly, in another embodiment of the invention, a substantial part of a cable run of the network from the server to the receivers is provided by telephone-grade twisted-pair cable.

Features which distinguish conventional telephone-grade twisted-pair cable from standard network cable are:
- it falls below the specification of ANSI/EIA/TIA-568-1991, Category 3;
- it may be in accordance with British Telecommunications specification CW1308;
- it may be of the type known as Category 2 twisted-pair (even though category 2 is no longer a standard specified by ANSI/EIA/TIA) ;
- it has a characteristic impedance at 16 MHz substantially higher than 115 Q ;and/or
- for a run to a single telephone, it has less than four twisted pairs.

Preferably, the system further includes a telephone connected by a first splitter to the network, in particular to the telephone grade cable, adjacent the respective receiver, and a telephone exchange connected by a second splitter to the network, in particular to the telephone grade cable, remote from the respective receiver. Accordingly, an existing telephone system can continue to be used.

Another aspect of the invention provides a receiver for use in such a system that responsive to a digital AV signal that is transmitted by the server over the network and addressed to that receiver so that point-to-point communication is established from the server to that receiver, and preferably, the receiver is tuned to a given channel.

Preferably, the receiver further comprises means for converting the digital signals to analogue signals (for instance an analogue to digital processor) for supply to a display device (for example a visual display unit, for example a television), and the digital to analogue converting means may include means for decompressing the digital signals (for example using decompression techniques such as MP3 or MPEG2 decompression techniques).

As mentioned above, the installation of new Category 5 cabling into an existing hotel may in many instances be difficult, expensive and inconvenient. However, most hotels have an existing coaxial cable network for distributing analogue television signals. Conventional analogue television coaxial cable is of inferior quality, but it has been realised that it can be used for the transmission of digital AV signals in a controlled environment such as a hotel.

Accordingly, in a further embodiment of the invention, a substantial part of a cable run of the network from the server to the receivers is provided by a conductor, preferably coaxial cable, arranged to carry the digital AV signals for those receivers, those signals being provided on respective channels each allocated to a respective one of the receivers, and each receiver being tuned to its respective channel.

As mentioned above, RG59 coaxial cable places a limit of about seventy-six on the number of channels and therefore on the number of programmes that it can carry in a conventional arrangement. However, with this embodiment of the invention, there is no limit that the cable places on the number of programmes or other services that the server can make available, because each channel is associated with a particular receiver, rather than a particular programme. There is a limit on the number of receivers that can be connected to the cable if each receiver is to have its own channel, but in the context of hotel distribution, or neighbourhood cable television distribution, this limit is not a problem.

Especially in a hotel environment, the coaxial cable may be analogue television grade coaxial cable, because it is relatively inexpensive and may already be installed. Features which distinguish such cable from, for example, the coaxial cable which is used in 10Base2 computer networks are that:
- it has a characteristic impedance of 75 Q, as opposed to 50 Q; and/or
- it is substantially in accordance with specification RG59 or RG62.

Preferably, each of the plurality of receivers is connected to the coaxial cable via a cable modem whose tuning is preset to the channel allocated to the respective receiver. Also, the server is preferably connected to the coaxial cable via a cable modem that is controlled by the server to place the digital AV signal for the programme selected for each receiver on the channel allocated to that receiver.

A further aspect of the invention provides a corresponding method of distributing AV signals to different locations, the method comprising providing a server capable of providing digital AV signals for a plurality of programmes, providing receivers at the locations, providing a network connecting the server to the receivers, each receiver selecting a required one of the programmes and communicating the selection to the server, the server responding to such a selection and transmitting the digital AV signal for the selected programme over the network addressed to the receiver that selected that programme, and each receiver responding to the digital AV signal that is addressed to that receiver so that point-to-point communication is established from the server to that receiver. Preferably, the transmitting includes transmitting the digital AV signal over telephone-grade twisted-pair cable and/or over coaxial cable on a channel allocated according to the receiver to which the signal is being sent, and each receiver being tuned to its respective channel.

Although digital networking is employed with its associated advantages, the source signals may be analogue signals and the output signal may be used by a picture/sound reproduction means (for instance a visual display unit such as a television) with a conventional analogue input.

Suitable analogue to digital converting means preferably includes means for compressing the digital signals to a standard compressed digital format (for instance a processor, in particular a processor adapted to operate MPEG2 or MP3 compression routines), and each digital to analogue converting means preferably includes means for decompressing the digital signals. This reduces the amount of network traffic.

The receiving means may include an aerial for receiving modulated terrestrial analogue television/radio signals for a plurality of programmes, and means for demodulating the modulated signal for at least one of the programmes (for example a processor).

Additionally or alternatively, the receiving means may include a satellite dish for receiving scrambled and multiplexed satellite analogue television signals for a plurality of programmes, and means for descrambling and demultiplexing the signal for at least one of the programmes (for example a processor). However, since many satellite distributors use proprietary software and hardware (their "set top box") to ensure that programmes are only received by registered subscribers, the receiving means may alternatively or additionally include a satellite receiver, for instance a satellite dish, for receiving scrambled and multiplexed satellite analogue television signals for a plurality of programmes, means for descrambling and demultiplexing the signal for at least one of the programmes to produce an intermediate signal, means for modulating an RF signal with the intermediate signal, and means for demodulating the modulated RF signal. The descrambling, demultiplexing and modulating may therefore be provided by a conventional set top box.

The invention provides distribution of AV signals using point-to-point communication between a server and one or more receivers; wherein the point-to-point communication is enabled by providing a dedicated channel between the server and each receiver.

In a further embodiment of the invention, there is provided point-to-point communication between each of the receivers and the server by way of a dedicated back channel between each receiver and the server. Preferably, the back channel uses the same physical channel as the dedicated channel for distribution of signals to the receiver.

In the various aspects of the invention described, the receivers are preferably local control units (LCU) capable of receiving digital information and/or converting the digital information for display on a display unit such as a TV set and/or controlling a display unit such as a TV set. Preferably the LCUs comprise means for decoding the digital information, for example for decoding an MPEG stream. Preferably they further comprise means for transmitting information back to the server, for example control information for selecting an information source. The LCUs therefore preferably provide a number of functions in addition to those provided by conventional television sets, and may be connected to television sets or integrated into them.

Many of the embodiments as described herein (in any aspect or embodiment) are directed to systems within hotels and their installation and use. However, the embodiments, and the systems, methods and features, described herein are also readily installed and used within other environments, in particular multi-user or multi-room environments. Such environments include, in particular :
- Ships, particularly cruise ships
- Aeroplanes
- Trains
- Hospitals
- Multi-dwelling units, for instance blocks of flats, or condominiums
- Groups of houses
- Offices or groups of offices, factories, shops or groups of shops, schools and other work, commercial or educational environments
- Stations, airports and other transport termini

Indeed, one of the features of the preferred embodiments is that they are readily transferable between various environments, such as those described above, with little or no modification.

Accordingly, references to a guest shall be taken to include any user of any such embodiment in any such environment.

Connections between a server and local control units are established, in various embodiments, via cabling, in particular Category 3, Category 5, telephone, or coaxial cabling as mentioned herein, microwave or other electromagnetic wave linkage, satellite transmission, bluetooth, and combinations of these media. In certain environments, for instance within trains, in preferred embodiments connection between a server and local control units is established by means of radio links rather than, or in particular embodiments in conjunction with, cabling.

Another feature of the preferred embodiments is that the signals, data or information which are distributed are not limited to audio/visual, particularly television, signals, data or information, nor are preferred embodiments limited to providing entertainment services. Indeed preferred embodiments provide general information, messaging services, alarm calls, pricing and billing information, educational material, documents in electronic format, or indeed any type of material which can be stored or transmitted electronically and retrieved or received by a local server.

In particular embodiments, within hospitals, the system is used to provide messaging, alarm calls, and scheduling information to nurses, doctors and other hospital staff. In some such embodiments, local control units, or in the alternative local servers, are linked to pagers carried by staff.

In particular embodiments within schools, colleges, universities and other educational environments, the system is used to provide educational material, such as lecture notes, textbook material, and audio/visual material, and to enable communication between teachers and students, as well as providing general messaging, timetable and information services.

In particular embodiments within groups of houses, the system is used to provide entertainment, such as terrestrial and satellite television, radio, audio, video on demand, scheduled films, and games, educational material such as textbook material, lessons, lecture notes, and audio/visual material, advertising, both general and targeted, banking and other financial services, shopping services, and general information.

In particular embodiments within hotels, ships, trains, aeroplanes, stations, and airports, the system is used to provide, in addition to some of the material and services described above, timetable, ticketing, reservation, weather and other travel related information.

In particular embodiments within offices, factories and other work environments, the system us used to provide, in addition to some of the material and services described above, access to documents in electronic form, recordal of employee attendance, diary and scheduling services, payroll information and services, training material, and logistical information.

Features of any aspect of the invention may be combined with or interchanged with features of any other aspect as desired. Method features may be applied to apparatus aspects and vice versa. Features which are provided independently may be provided dependently, and vice versa.

### Brief description of the drawings

Preferred embodiments of the invention will now be described, purely by way of example, with reference to the accompanying drawings in which:
Figure 1 is a block diagram of a hotel with a conventional television signal distribution system;
Figure 2 is a schematic diagram illustrating how various input signals are combined in the system of Figure 1;
Figure 3 is a schematic diagram illustrating tuning of a television to a particular one of the signals in the system of Figure 1;
Figure 4 is block diagram of the hotel with a distribution system of one embodiment of the invention;
Figure 5 is a block diagram of the hotel with a distribution system of another embodiment of the invention;
Figure 6 is a schematic diagram illustrating how various input signals are combined in the system of Figure 5;
Figure 7 is a schematic diagram illustrating tuning of a television to a particular one of the signals in the system of Figure 5;
Figure 8 is a drawing to illustrate a 64QAM modulation scheme;
Figure 9 is a block diagram of the hotel with a conventional telephone system;
Figure 10 is block diagram of the hotel with a distribution system of a further embodiment of the invention;
Figure 11 is a block diagram of equipment in a room of the hotel of Figure 10;
Figure 12 is a more detailed block diagram of part of the equipment of the system of Figure 3,4 or 10;
Figure 13 is a schematic rear view of a television and local control unit, with their rear covers removed, which may be used in the system of Figures 3,4 or 10;
Figure 14 is a schematic rear view of a combined television and local control unit, with its rear cover removed, which may be used in the system of Figures 3,4 or 10;
Figure 15 is a schematic rear view of a different combined television and local control unit, with its rear cover removed, which may be used in the system of Figures 3,4 or 10;
Figure 16 is similar to Figure 15, but showing a modification;
Figure 17 is a block diagram of a local control unit together with a wall box connector;
Figure 18 is a flow diagram of a boot process of a local control unit;
Figure19 is a block diagram of a server in the systems of Figures 4,5 and 10; and
Figures 20-24 are more detailed block diagrams of various parts of the server of Figure 19.

### Mode(s) for carrying out the invention

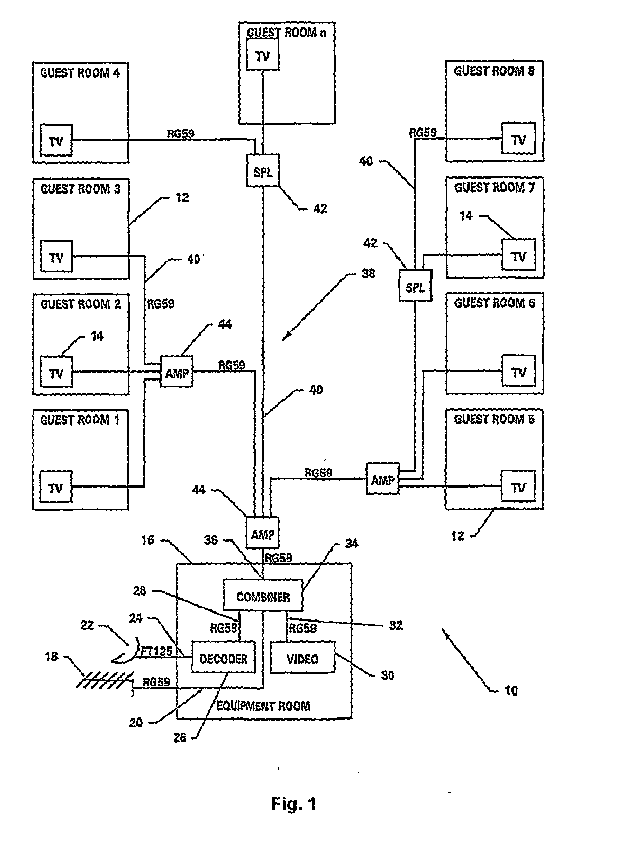

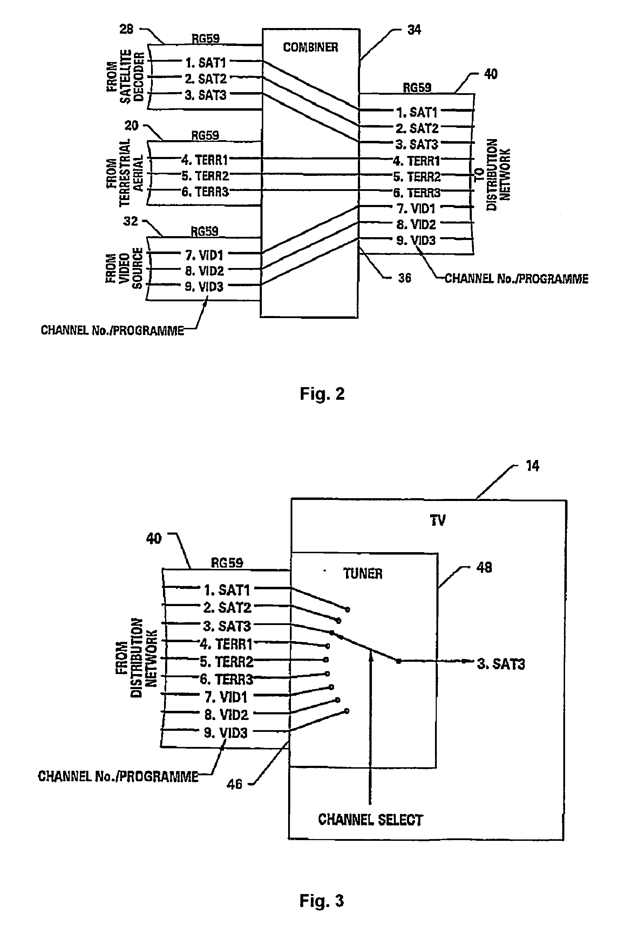

Referring to Figure 1, a conventional hotel 10 has a plurality of guest rooms 12, nine of which are shown in the drawing, each provided with a television set 14. The hotel 10 also has an equipment room 16 which is fed with analogue terrestrial television signals from an aerial 18 via an RG59 coaxial downlead 20 and also with digital satellite television signals from a satellite dish 22 via an FT125 coaxial cable downlead 24. The satellite television downlead 24 is connected to the input of at least one satellite television decoder (or "set top box") 26, which supplies analogue television signals for different programmes(say"SAT1","SAT2"and"SAT3") on different frequency multiplexed channels (say channels 1,2 and 3) on an RG59 coaxial cable 28. The analogue terrestrial television signals provided by the downlead 20 contain different programmes (say"TERR1","TERR2" and "TERR3") on the different frequency multiplexed channels (say channels 4,5 and 6) on which those signals were broadcast. The equipment room 16 also contains video replay equipment 30, such as a video tape player or DVD player, which provides analogue video signals for different programmes(say"VID1","VID2"and"VID3") on further different frequency-multiplexed channels (say channels 7,8 and 9) on a further RG59 coaxial cable 32. The coaxial cables 20, 28,32 are connected to the inputs of a combiner 34, which provides a frequency multiplexed output 36 having all nine programmes on their nine channels 1 to 9, as illustrated schematically by Figure 2. The output 36 of the combiner 34 is connected to the aerial inputs 46 of all of the televisions 14 by an RG59 distribution network 38 comprising lengths of RG59 coaxial cable 40 extending around the hotel and passive splitters 42, with active distribution amplifiers 44 being included as required to ensure that there is a sufficient signal level for each of the televisions 14. The distribution amplifiers 44 are preferably of the two-way type, so that the location where the television signals are put onto the distribution network 38 can be changed if desired without requiring substantial reconfiguration of the network 38. As shown schematically in Figure 3, each television 14 includes a tuner 48 connected to the aerial input 46, and the tuner 48 can be adjusted by the user to select the channel frequency of the channel that the user requires to be shown on the television 14.

There are a number of problems or disadvantages with a conventional distribution system as described above with reference to Figures 1 to 3. First, all of the channels are available to all of the televisions 14, and so special steps need to be taken if it is desired to prevent a particular programme, such as a pay-per-view programme, from being viewed on a particular television 14. Second, there is a limit to the number of frequency-multiplexed channels that can be distributed by the network 38, because each television or video programme occupies a bandwidth of 6 MHz, and RG59 coaxial cable which is typically used in such an installation has a typical bandwidth of 460 MHz, so that the cable cannot satisfactorily carry more than seventy-six frequency-multiplexed channels. Third, the television/video/radio/audio signals are distributed as analogue signals, possibly over many tens of metres, and, in many instances, provide unsatisfactory picture quality.

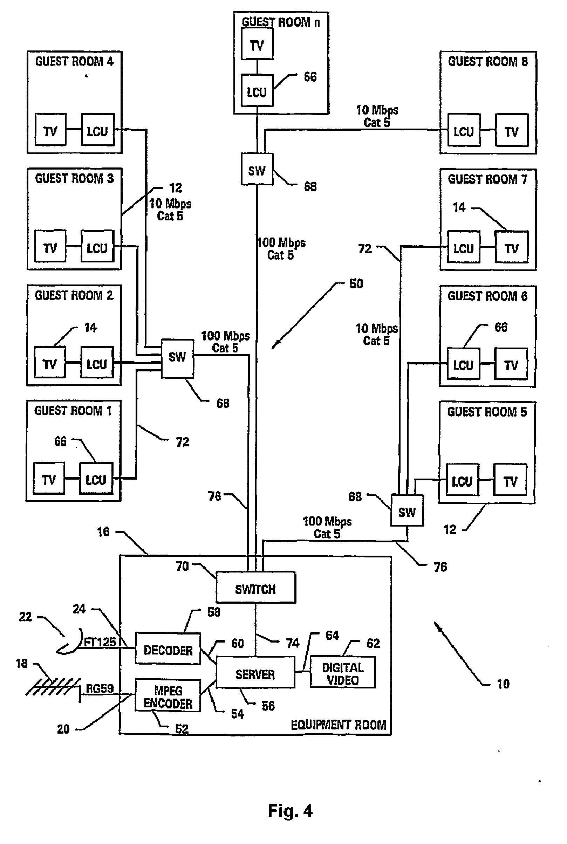

In order to deal with these problems and disadvantages, the embodiment of the invention that will now be described with reference to Figure 4 uses a switched point-to point digital distribution network 50 employing an internet protocol (IP) and in particular the user datagram protocol(UDP/IP). In the equipment room 16, the downlead 20 from the terrestrial television aerial 18 feeds a receiver and MPEG encoder 52 which provides digital MPEG video streams 54 for the received terrestrial television programmes to a server 56 (although one server 56 has been shown in the drawing, several such servers may be employed). Also, the downlead 24 from the satellite dish 22 feeds a decoder/descrambler 58 which provides digital MPEG video streams 60 for the received satellite television programmes to the server 56. Furthermore, the video replay equipment 62 has a digital output and provides digital MPEG video streams 64 for the video programmes to the server 56. The server 56 selects which of the video streams is to be transmitted to which room 12, and places the selected video streams on the digital network 50 using UDP/IP, or TCP/IP, each addressed to the selected room 12. ln each room 12, the television 14 is connected to the network 50 by a local control unit (LCU) 66 that receives the video stream addressed to that room 12, decodes it, and supplies the resulting analogue video and audio signals to the television 14. Each LCU 66 is also operable to send requests over the network 38 to the server 56, for example to change the television/video/radio/audio channel supplied to that LCU 66.

The network 50 is designed to support a bandwidth of up to 10 Mbps for communication between the server 56 and each LCU 66. The components required to deliver this bandwidth will vary because of the different topology of each hotel-for example, the layout of floors, risers, and the location of the equipment room 16 in which the server (s) 56 is/are situated.

The required bandwidth of 10 Mbps per LCU 66 can be delivered using a switched network built on one or more high speed (100 Mbps) switches 68 each having up to twenty three ports, for instance eleven ports, that are in turn linked to the server (s) 56 (and to each other) via a Gigabit switch or high speed backbone network linking switches 70. Each LCU 66 is connected to the network via such a 100 Mbps switch 68 and a Category 5 (ANSI/EIA/TIA-568-1991) unshielded twisted pair (UTP) cabling system 72 operating at up to 10 Mbps. Each switch 68 is connected to the backbone 74 using such a Gigabit switch 70 and a Category 5 UTP cabling system 76 operating at up to 100 Mbps. The server (s) 56 is/are connected directly to the Gigabit switch 70.

This architecture can be simplified for smaller installations that do not have high bandwidth requirements, by using 10/100 Mbps switches with fewer ports, and by using a lower speed cabling system for the backbone network.

The embodiment described above using Category 5 UTP cabling is efficient, scalable, manageable and cost-effective. It also uses many established components and widely available skills. From the network management perspective, this option is the most controllable and the easiest architecture on which to build other applications. However, the installation of the cabling 72, 76 and switches 68 is disruptive and so installation into an existing hotel will make hotel rooms unavailable for a substantial period of time, which may be unacceptable to the hotel's owners. For this reason, this option may only be suitable for new hotels and the refurbishment of existing hotels.

To deal with this problem, the required bandwidth of 10 Mbps per LCU 10 can also be delivered using the RG59 baseband coaxial cable infrastructure 38 as shown in Figure 1 within an existing hotel 10. While this type of coaxial cable is of inferior quality to the coaxial cable used by providers of cable television to the residential market, the cable can be used for the transmission of data in a controlled environment such as a hotel.

Low grade coaxial cable is traditionally used to supply analogue video to hotel rooms. Each television signal occupies a 6MHz bandwidth. The coaxial cable has a typical bandwidth of460MHz, which allows up to 76 television channels to be frequency multiplexed together and carried by the one cable network.

The losses over a 75 Q RG59 television coaxial cable are typically 0.13dB/m at 100 MHz, 0.19 dB/m at 200 MHz and 0.46 dB/m at 100 GHz. Such coaxial cable can be used without modification to carry digitally encoded MPEG video. Using digital encoding, each analogue channel is transformed to a "data pipe" with over 30Mbps of capacity. This pipe is used to carry a multiplex of video channels. The number of video channels that can be carried depends on the picture quality required. For received PAL TV picture quality, typically six video channels can be carried in each pipe.

The lowest frequency channel is used as a "back channel" to feed low data rate information from individual rooms back to the server 56. The back channel is operating at a much lower data rate and can withstand much worse signal-to-noise ratios than the wide-band analogue television signals. Therefore, the system can cope with the additional losses introduced by the return path on top of the losses from any distribution amplifiers used.

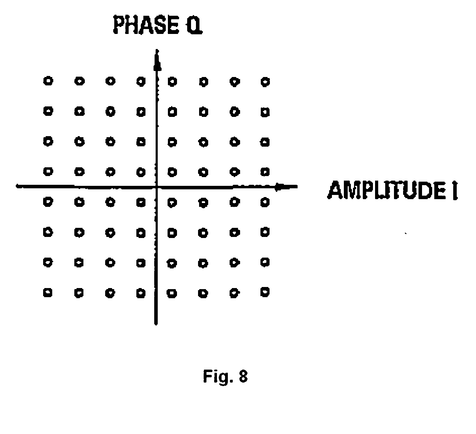

Digital video over coax generally uses a 64QAM modulation scheme, where groups of 6 bits are mapped to a carrier state. Each carrier state has a unique amplitude/ carrier phase position as illustrated in Figure 8.

In order to decode 64QAM with an acceptable worst case error rate, before error correction, of 1 error in 10⁴ bits, a signal-to-noise ratio per bit of greater than 18dB is needed. At a smaller signal-to-noise ratio each dot in the constellation will become blurred and it will not be possible to differentiate one dot from another. A 1.5dB difference in signal-to-noise level will make an order of magnitude difference in the error rate.

Higher order QAM schemes can be used to increase the data capacity of each channel. The increased capacity is gained at the price of needing a higher signal-to-noise ratio to properly decode the signal. Conversely, lower order schemes are more rugged but have a lower capacity.

MPEG compressed video and audio is sensitive to errors. A final error ratio of near 1 in 10¹⁰ is needed for good quality pictures. Forward error correction schemes are used to correct errors in the raw data stream to achieve the required error rate. The signal-to-noise ratios needed to demodulate 64QAM to obtain good quality MPEG encoded video are slightly less than that needed to receive an analogue TV channel. A major difference though, is that if the signal-to-noise ratio of the 64QAM signal degrades below the minimum required the picture rapidly degrades and is easily lost. With analogue TV the signal degradation is much more graceful. The signal-to-noise ratio of the transmitted signal will be much higher than that required for successful demodulation and decoding of the MPEG video. However, the coax network will degrade the signal. It will attenuate the signal, and noise will be introduced into the system by:
- Amplifiers-all amplifiers are not perfect and introduce some noise. The signal to-noise ratio will be degraded by the noise figure of the amplifier, typically 3 to 5dB
- Ingress into the cable system from other RF transmissions and other electrical noise.

Maximum signal levels will be determined by the maximum practical levels any amplifiers can amplify to whilst maintaining their linearity (if the amplifiers compress, the outer points in the constellation will not be in the correct position) and regulatory EMC limits.

The existing coaxial cable infrastructure has a wide bandwidth and could be used for digital multimedia applications. When considering their suitability for a multimedia system a number of factors should be considered:
- The single point to multiple point topology means that the capacity of the one coaxial cable is the capacity of the entire network.
- Distribution amplifiers limit the up-link performance of the network. The bandwidth of the up-link may be limited to less than that required for excessively demanding up-link tasks.
- To improve the up-link performance, new distribution amplifiers would be needed to give improved up-link performance. Upgrading the infrastructure may be difficult and costly. Depending on whether any records have been kept, and the accuracy of such records, a major problem may be locating the existing distribution amplifiers. Alternatively, removing the capability for fast up-link access may allow the use of existing cable.
- It is likely that the coaxial cable typically used in hotels is lower grade than that used in residential cable television. Ingress of signals from local terrestrial television channels may cause problems by interfering with the digital multimedia signals.
- The coaxial cable is not DC coupled and so cannot carry the low frequency data found in many data communication standards.
- As the present analogue television and the new digital multimedia system would occupy the same bandwidth on the same cable it would be difficult to convert the existing cable network to a digital multimedia whilst still supporting analogue television. This would rule out an incremental introduction of a multimedia service in a hotel.
- Depending on where in the network the fault is located, faults in the cable distribution system could affect services to one or many, possibly all, rooms of the hotel.
- Faults may be difficult to locate.
- Possible coax-based approaches include: Operate as current digital cable TV does, with all channels broadcast (say 76 frequency channels multiplexed 6ways), i. e. 456 available channels. Certain channels could carry broadcast TV and radio for access by any guest, with others dedicated to room-specific services. In this case, any room could receive any channel, however, the system would need a means of informing each room where to find the service it requested. This approach has the advantage of requiring equipment similar to current digital cable TV (i. e. cable modems etc.), but the channel identification problem is significant. Other issues, noted earlier, are the difficulty of partial upgrading, the risk of poor signal quality in the hotel cable system environment, poor amplifier linearity, and the provision of suitable bandwidth in the back-channel.
- Provide the same 456 channels, but dedicate each to a room. Each channel can carry any of the services a room might require, with the server selecting the source. This method gives a higher limit to the number of rooms that can be serviced, and removes the need for frequency channel selection and de multiplexing at the LCU. Other potential problems are as for the first method above (i. e. partial upgrading, poor signal quality, back-channel, etc.).
- Dedicate the whole cable to a single "pipe", with time multiplexing (i.e. like Ethernet). Conceptually this seems attractive, but the equipment required to realise this would be very high performance, very expensive, and does not exist currently.

Of these coax-based approaches, the second is preferred.

Across conventional hotel television infrastructures, each programme is broadcast in analogue format on a separate channel within the coaxial cable 40, as already described with reference to Figures 1 to 3. The programmes are broadcast simultaneously and, when the guest changes programme, the television 14 picks up the requested programme by changing the frequency to which the tuner 48 is tuned. In more complex arrangements to that shown in Figure 1, any signals that are returned to the equipment room 16 are tagged with the identity of the room initiating the signal and sent up-stream using the lowest frequency channel. The partitioning of channels within coaxial cable in this fashion has, in the past, been ideal for the efficient and cost-effective delivery of broadcast services to television sets in many situations-home via RF, home via cable, hotel room via cable. However, it is only recently, with a desire to make more services available, including interactive services, that the demand for substantially more bandwidth on the return path has arisen. Despite schemes for allocating certain channels for non-broadcast services, these schemes are insecure as well as being complex to implement, maintain and administer. The underlying problem with the current method of partitioning bandwidth by service is that the channel carrying the service is physically separate from the channel that carries the response. While this is not an issue with broadcast services, it is a fundamental drawback to the delivery of interactive services.

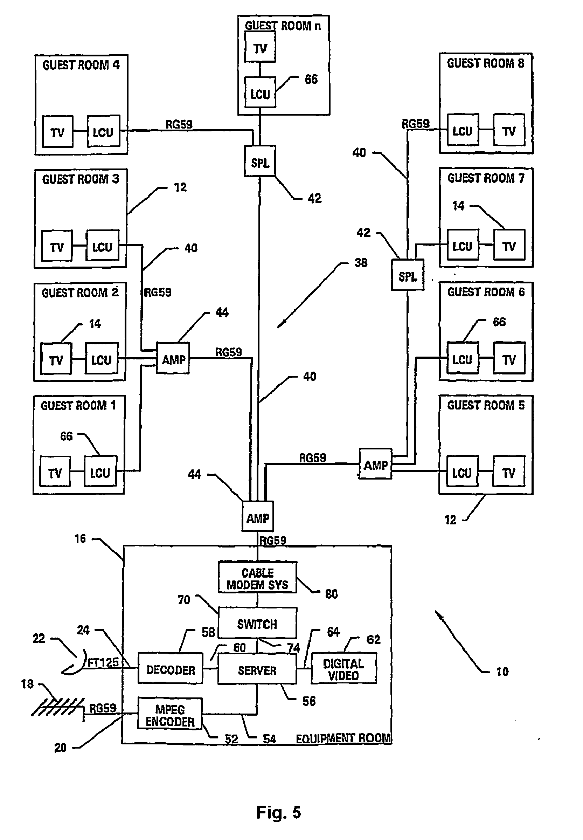

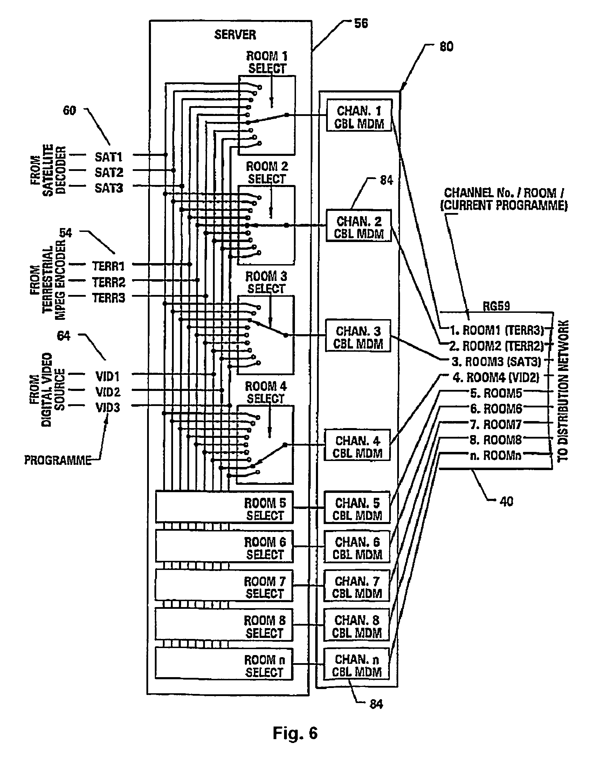

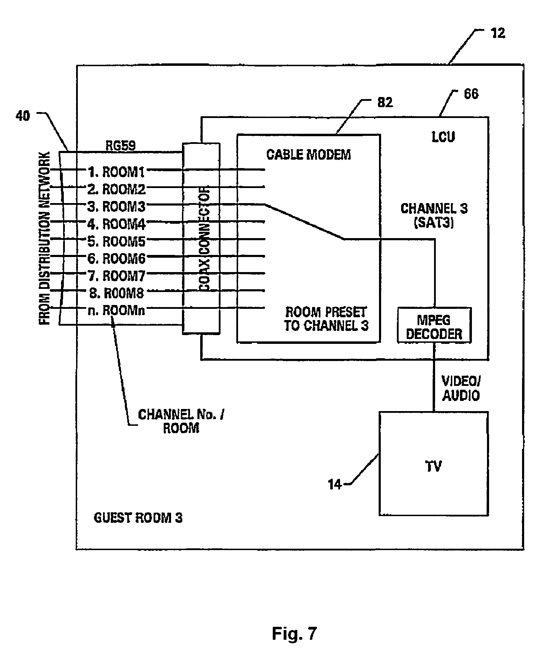

As illustrated schematically in Figures 5 to 7, the issue of the physical separation of delivery and response channels is addressed by repartitioning the channels within the available bandwidth of the cable 40. Instead of allocating one service per channel (e. g. channel 5 in Figures 2 and 3 is the TERR1 television programme), the embodiment of Figures 5 to 7 allocates one room per channel (e. g. channel 5 in Figures 6 and 7 is the service for Room 5). This changes the distribution of services from a "broadcast" model to a "point-to-point" model-similar to the local area network model used in business.

The repartitioning of the channels on the coaxial cabling 40 is achieved by installing a cable modem termination system80 between the server 56 and the coaxial cable network 38, and a cable modem 82 in each LCU 66. As shown in Figure 6, the cable modem termination system 80 can be considered to comprise a cable modem 84 for each channel, and the server 56 can be considered to be able to connect each cable modem 84 selectably to any of the incoming video streams. Each cable modem 84 then transmits that video stream on a preset channel on the coaxial cable 40. As shown in Figure 7, the cable modem 82 in each LCU 66 is preset to a particular channel, i. e. the channel for the room 12 in which the LCU 66 is situated. Each channel carried in the coaxial cable 40 can thus be dedicated to a single LCU 66. The server 56 will only transmit the service requested by the LCU 66. This is a simple architecture to install, as few cabling changes have to be made between the server 56 and room 12, and no cabling changes need to be made in the room 12. However, depending on the number of rooms served by each spur of the coaxial cable network 38, it may be necessary to modify the configuration of the coaxial cables at each riser to ensure that each spur has enough channels to support the number of rooms it is intended to serve.

It should be noted, in the system described with reference to Figures 5 to 7, that:
- two-way amplifiers 44 are provided at some of the nodes of the cabling system 38 to amplify/maintain the signal level of signals passing from the sub-branches (in Figure 5 such a sub-branch is represented by the line 40 leading from, for example, Guest Room 1 to the nearest amplifier 44 shown just to the right of Guest Room 2) of a branch (in Figure 5 such a branch is represented by the line 40 leading from, for example, the amplifier 44 shown just to the right of Guest Room 2 to the amplifier 44 shown just above equipment room 16) to that branch in addition to the signal level of signals travelling from the branch to the sub branches;
- a signal can be transmitted on one channel from one of the LCUs 66 to the server 56 generally at the same time as a signal is transmitted on another channel from the server 56 to another of the LCUs 66; and
- the same channel is used for transmission from the server 56 to a particular LCU 66 as is used for transmission from that LCU 66 to the server 56.

Although it is known to use two-way amplifiers 44 in coaxial distribution systems as described with reference to Figure1, they are employed to facilitate relocation of the location 16 where signals are put onto the system, rather than to enable the latter two features listed above, i. e. generally simultaneous transmission in both directions, and transmission between the server 56 and an LCU 66 in both directions on the same channel.

A number of digital television standards have been adopted by residential cable television suppliers. These standards typically allow for one or more of the 6MHz downlink channels to carry IP traffic at 27Mbps. Up-links operate at typically between500Kbps and 10Mbps. A number of open and proprietary standards exist. Open standards include:
- DOCSIS (Data Over Cable System Interface Specification) is the standard for cable modem products in North America,
- DVB EuroModem is a standard designed to address European requirements.

In order to deal with the problem of disruption if installing a new network into an existing hotel, the required bandwidth of 10 Mbps per LCU can also be delivered using the telephone cable infrastructure within the hotel 10.

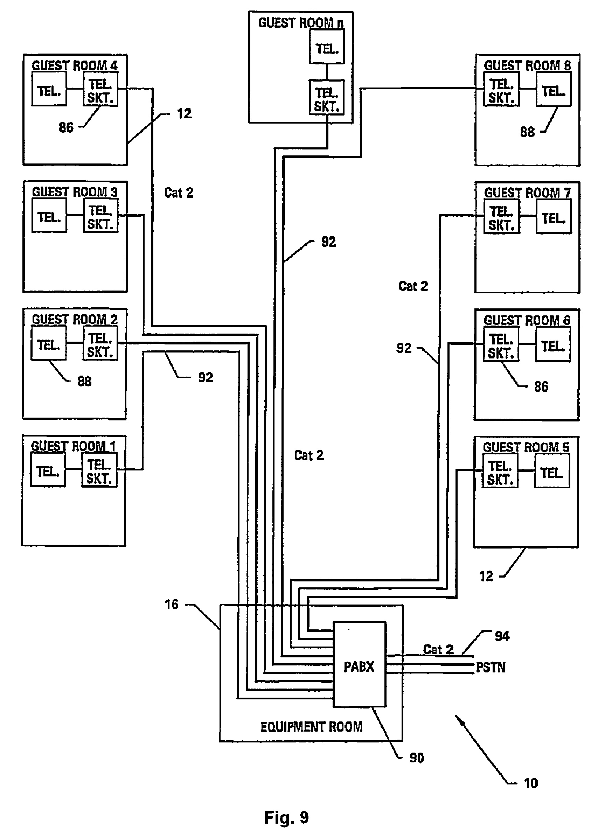

As shown in Figure 9, the hotel 10 might typically have a telephone socket 86 and telephone 88 in each room 12, and a private automatic branch exchange (PABX) 90 in the equipment room 16. Each telephone socket 86 is connected to the PABX 90 by a separate Category 2, or British TelecomCW1308, cable 92 having two twisted pairs, so as to provide a point-to-point network. The PABX is connected to the public switched telephone network(PSTN) with the required number of lines 94.

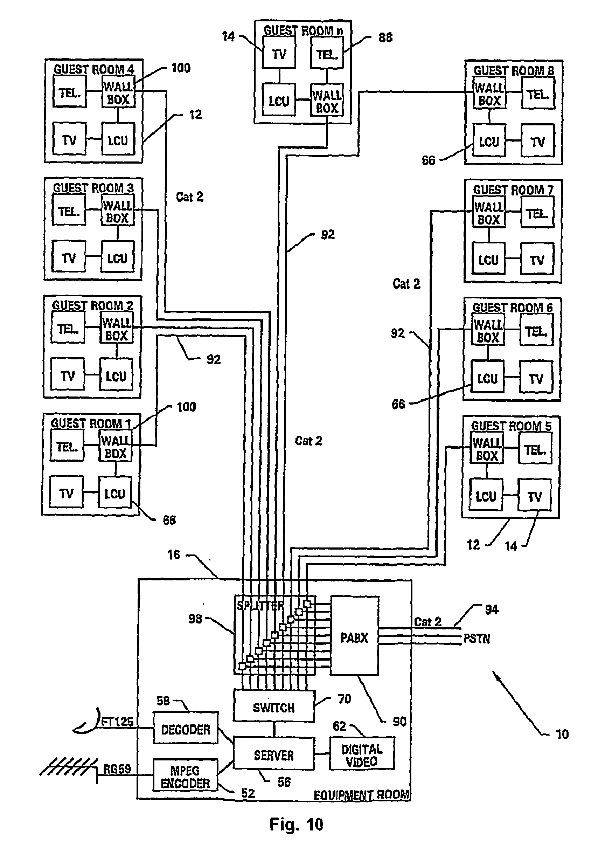

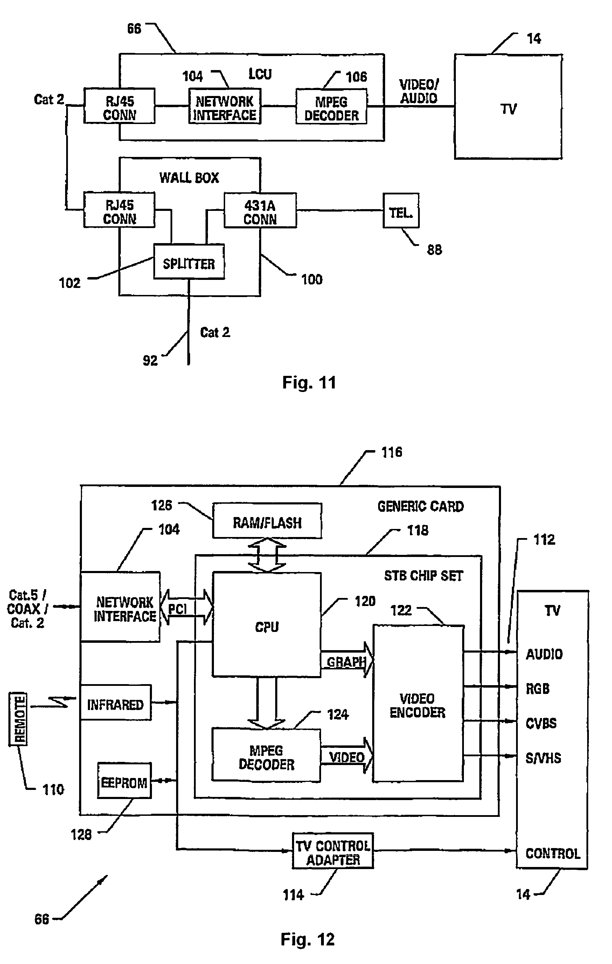

While this type of cable (Category 2) is of inferior quality to the standard network cable (Category 5) used in business offices, the cable can be used for the transmission of data in a controlled environment-such as the hotel 10, as shown in Figure 10. The equipment room 16 is provided with a server 56, satellite decoder 58, MPEG encoder 52 for terrestrial television, digital video replay equipment 62 and Gigabit switch 70, similar to those described above with reference to Figures 4 and 5. Also, the Gigabit switch 70 is connected to a multiple splitter 98 inserted in the paths of the Category 2 cables 92 to the PABX 90, so that the cables 92 extending throughout the hotel 10 can carry the lower-frequency signals to and from the PABX 90 and the higher frequency signals to and from the server 56. In each room 12, the standard telephone socket 86 is replaced by a wall box 100, as shown in greater detail in Figure 11, which includes a splitter 102 connecting the cable 92 both to the telephone 88 and to an LCU 66. The LCU 66 includes a network interface 104 and MPEG decoder 106, which decodes the digital video signal and supplies corresponding analogue video and audio signals to the television 14.

Traditional analogue telephone operates in the frequency band 300 to 3.3KHz. The twisted pair cable 92 does not have as wide a bandwidth as coaxial cable but the bandwidth is significantly wider for digital signals than the band used for analogue telephony. The actual bandwidth of data the cable can support depends on the distance it needs to be transmitted and the degree of interference or cross talk it is subjected to. For the typical cable distances in a hotel of say 100m, a data rate of up to 25 Mbps may be achieved in one direction. This is adequate for carrying an MPEG-2 encoded television channel.

As twisted pair cables tend to be run in bundles, cross talk between twisted pairs, rather than attenuation of the signal, tends to be the limiting factor affecting operating distances. Cross talk can be divided into two different categories, NEXT (Near End Cross Talk) and FEXT (Far End Cross Talk).

The difference between NEXT and FEXT and the consequences of the two effects can be understood by considering two twisted pairs bundled together going into a PABX:
- NEXT-If the PABX is transmitting a high level signal down one twisted pair whilst trying to receive a low-level signal from another twisted pair, cross-talk from the high level signal can easily swamp the low level signal
- FEXT-If the PABX is transmitting two high level signals down two twisted pairs cross-talk between the two pairs will still occur but will be at a low level.

NEXT tends to cause more problems than FEXT.

As the system of Figures 10 and 11 demands a high bandwidth down-link with a narrower bandwidth up-link, the effects of NEXT can be minimised. If all data is travelling in the down-link direction, from the server 56 to an individual hotel room 12, NEXT is not a problem. By allocating more bandwidth than is strictly needed for the data returning to the equipment room 16 the effects of NEXT can be minimised for uplink data.

Factors to consider for using the existing hotel telephone network for a multimedia system include:
- The overall capacity of the system is not limited by the capacity of any individual twisted pair cable
- The capacity to any individual room is limited by the capacity of the individual twisted pair. However this capacity is adequate for MPEG-2 video and other multimedia applications
- As long as the digital system used does not put any energy into the telephone channel bandwidth, the hotel multimedia system can coexist with the existing telephone network
- A fault on an individual twisted pair cable will only affect the room the cable is linked to
- The upgrade from analogue television to a digital multimedia service can be done on an incremental room by room basis.

Two standards utilising standard twisted pair telephone wires are possibly applicable to the embodiment of Figures 10 and 11. These are ADSL and Home PNA.

ADSL (Asymmetric Digital Subscriber Line) was originally proposed for video on-demand applications over the 'local loop' between the telephone exchange and home. More recently, it has been used for high speed internet access over the same local loop. Both applications need higher down-link data rates than up-link data rates and so are suitable for an 'asymmetric' standard i.e. a higher down-link bandwidth relative to uplink bandwidth. This also minimises the problems of NEXT described above. ADSL typically has a range of downstream speeds depending on the distance. This includes 8.448 Mbps at distances of up to 2750 metres. Up-stream data rates range from 16 Kbps to 640 Kbps depending on application and individual product implementations. The standard is designed to operate at the same time as standard analogue telephone equipment. It does this by operating in the frequency range of 25KHz to 1 MHz, leaving the lower frequency portion clear for standard telephone. As equipment using the standard is being deployed by a large number of telecommunications operators, both head end equipment suitable for many subscribers and consumer modem/set top boxes are available. As ADSL is designed for point to point links only, the splitters 98, 102 will probably be needed, placed at both the head end and at the entrance to the hotel room. Their function is to ensure that additional lines going to the hotel PABX 90 or room telephone 88 do not form part of the ADSL network. Noise induced onto telephone lines tends to have a "bursty" nature. This badly affects real time services such as video by wiping out a block of data which error correction schemes find impossible to correct. In a real time system, there is no chance to retransmit the data as there is in data communication systems. To overcome this problem, ADSL interleaves blocks of data so that the errors caused by the noise burst become distributed "white" noise which causes occasional bit errors. These errors may then be rectified by standard error correction schemes, or may not need correction at all, as they are spread across the picture and so are not noticeable to the viewer. There is little doubt that ADSL is suitable for multimedia applications in hotels, but it may be considered over-specified for the task and so may be more expensive than necessary.

Home PNA is an alliance of over one hundred manufacturers who have devised a computer networking standard using the telephone cable network found in domestic homes. The alliance includes many large manufacturers such as IBM, 3COM and Intel. To access the standard, companies have to become an adopter member of the alliance. Two versions of the standard exist. The first is designed to operate at 1 Mbps, which is clearly too slow for video, but may be suitable for other parts of the hotel system. The second operates at 10Mbps, which is more suitable. The technology is designed to operate concurrently with telephone and xDSL. It does this by operating at higher frequencies than either of these two technologies. As the standard is designed for applications in homes, a wide range of equipment is available for domestic applications at low cost. This equipment would be suitable for use in hotel rooms.

It is clear that the coaxial solution of Figures 5 to 8 meets the down-link requirements but may not easily meet those of the up-link. It may be possible to use a hybrid solution that uses the coaxial cable as a down-link and the telephone system as the up-link. A possible solution may be to use the coaxial cable for frequency multiplexed, MPEG encoded television channels with the rest of the services carried on, for instance, a 1 Mbit HomePNA network. Any hybrid solution is not likely to be as neat a solution as a single network solution, as it is likely to need two connections to the LCU 66 located in the hotel room 12. Two chipsets may be needed in the LCU 66, one to decode the MPEG video, the other for the remaining applications, though in some embodiments, these functions are combined in a single chipset.

Of the methods for providing a network discussed above, clearly Category 5 cabling (Figure 4) is the simplest and most realisable. However, in order to supply to hotels yet to be re-furbished, the alternatives are provided of a coaxial cable based system, preferably with each channel dedicated to a room (Figures 5 to 8), and a telephone line based approach (Figures 10 and 11).

The heart of the system within the hotel room is the LCU 66, which acts as an interface between the guest and the server 56. Some of the functions of the LCU 66 are similar to set top boxes (STB) used to access broadcast digital television signals, and the LCU 66 can therefore utilise many of the components designed for these devices. The LCU 66 may be provided in a box separate from the television 14, or it may be physically located inside the television set 14. A major difference between the LCU 66 and a conventional STB is that the down-link data will be specific to that box and not broadcast. This means that there is no requirement for user-adjustable "tuner" circuitry found in conventional STBs, as the LCU 66 will in effect be "tuned" to one fixed channel, and the server 56 will ensure that the correct data is transmitted on that channel.

Figure 11 shows a block diagram of the proposed architecture for the LCU 66, the heart of which is an STB chip-set 118, which is shown in Figure 12. Instead of the "tuner" circuit, the LCU 66 has a network interface circuit 104 that receives data from the communications network (be it based on Category 5, coaxial, or Category 2 cabling) and passes it on to the television 14 for display. The guest controls the LCU 66 via an infra-red remote control 110, which may also include a keyboard so that the guest can enter alphanumeric and other characters. Video and audio signals 112 are passed to the television 14 using standard signal formats such as RGB, CVBS or SNHS, along with stereo audio channels.

The LCU 66 is able to control the functions of the television 14, via a proprietary control interface circuit 114, so that the guest can use a single remote control unit 110 to adjust television parameters such as volume, brightness, colour etc. Additionally, this interface circuit 114 allows the server 56 to control the television 14 so as to display the time and turn on the television 14 for alarm calls, welcome messages, etc. One requirement for the LCU 66 is that it should not be proprietary to any one make of television, so a mixture of a generic card 116 (carrying the STB chip set 118, network interface circuit 104, etc.), software configurability and one or more daughter cards, such as the television control interface circuit 114, are used to overcome the problem of different proprietary interfaces to different makes of television sets.

Three different types of data are sent from the server 56 to the LCU 66, all of which enter the LCU 66 via the network interface circuit 104:
- Control commands
- Video and audio streams
- Other user data.

A central processor(CPU) 120 interprets commands directly, while other user data may, for example, be converted to graphical images by application software running on the CPU 120. The graphical image is built up in a frame buffer that is part of the video encoder circuitry 122. The digital video stream from the server 56, which is compressed using MPEG-2 compression techniques, is passed to an MPEG decoder 124 where it is converted to graphical images, which are also passed into the frame buffer in the video encoder 122. In some embodiments, unlike conventional STBs, the LCU 66 does not need to handle MPEG transport demultiplexing and de-scrambling, since these functions are handled by the server 56. The LCU 66 receives a single unscrambled MPEG stream. In other embodiments, a scrambled MPEG stream may also be received by the LCU 66, and the LCU 66 comprises means for descrambling the scrambled MPEG stream, in the form of a hardware or software descrambler. The video encoder 122 takes the bitmap image in the frame buffer and produces the analogue signals 112 that are passed to the television set. These signals 112 can be in various different standard formats such as RGB, CVBS and S/VHS. If possible, RGB is the preferred option as it gives the best picture quality (using the television set 14 as a monitor). However, not all television sets 14 can support this format of input, so an alternate such as CVBS (also known as "composite video") is also supported.

One of the requirements for the video encoder circuit 122 is to be able to generate pictures in either PAL or NTSC formats, as there is no single world standard (generally Europe uses PAL and the U. S. uses NTSC). The French SECAM standard probably need not be supported, as a PAL system could be used instead.

One final task which the video encoder 122 may perform is to add Macrovision copy protection encoding. This alters the synchronisation signals in such a way as to make recordings unviewable without altering the picture when viewed on the television 14. Use of this technology is often required when films are made available for presentation on a pay-per-view basis prior to their general release on video. Because of the way in which Macrovision works, the RGB output has to be disabled, so when enabled, the CVBS or S/VHS outputs will need to be used.

Audio signals are either extracted from the MPEG stream or created by the processor 120 (i.e. from a ".wav" file or other streaming audio source) and converted to stereo analogue signals using a digital to analogue coder/decoder. Some chipsets now offer Dolby Digital audio decoding as well as standard MPEG decoding.

In the case of a requirement for the LCU 66 to run the application software with complex graphics, the CPU 120 is preferably based on a powerful 32-bit core. To enable the MPEG stream to be decoded, a minimum of 2Mbytes of SDRAM are required, but most chip-sets 108 would require another 2Mbyte for processor applications. Use of a unified memory architecture removes the need for VRAM, by placing the frame buffer in the SDRAM. Additional hardware is also often included to render the images so that they do not "flicker" when displayed on the television 14.

All the application code, and the operating system code, is stored in Flash memory 126, so that the code can be upgraded. The memory controller to drive the SDRAM and Flash memory 126 is included on-chip, along with various peripheral controllers to interface to the EEPROM 128 and other devices. The IBM STB03xxx chip-set may be used for the LCU 66.

In view of the desire to install the system in an existing hotel 10 having existing television sets 14, it is desirable that the LCU 66 be able to connect to a diverse range of television sets without the need for manufacturing too many permutations of the LCU 66. There are two ways of addressing this requirement:
- the LCU 66 can be manufactured as a separate unit that can be securely mounted in the room 12; for example, attached to the base of the television 14 or securely fixed to the wall
- the LCU can be manufactured as a card that can be inserted into a slot on the television chassis, providing that the television 14 has a suitable chassis.

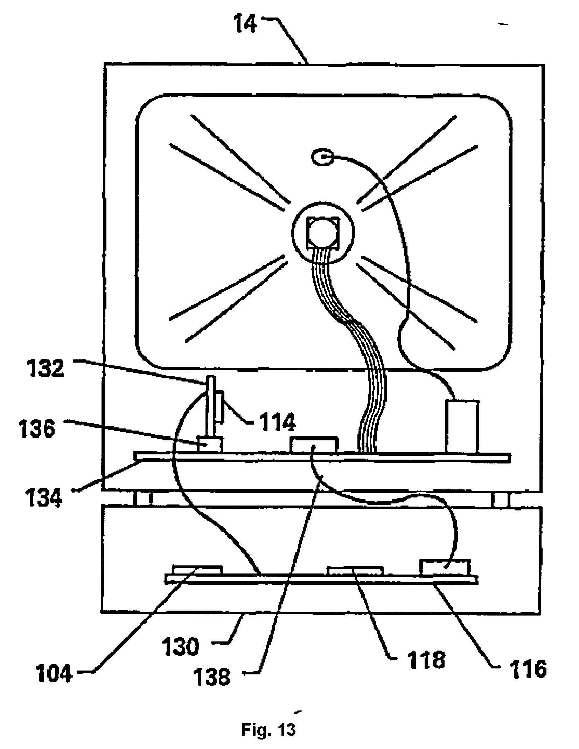

When the generic card 116 of the LCU 66 is provided in a stand-alone box 130, as shown in Figure 13, there are the advantages that:
- all of the common components can be built into the stand-alone box and components, such as the control adapter circuit 114, specific to the model of television set 14 can be built onto a daughter card 132 that slots into a slot 136 on the chassis 134 in the television 14;
- servicing of the television 14 can be managed independently from servicing of the stand-alone box 130;
- television sets 14 can be upgraded without the need to replace the stand-alone box 130; and
- the stand-alone box 130 can be moved to smaller hotels that have less demanding requirements for functionality.

However, the casing for the stand-alone box 130 will in itself be a discrete cost, and different casings will also have to be manufactured for each model of television 14 if the casing is to be attached to the base of the television 14. Servicing will also be more difficult, as the system will comprise two physically separate components rather than a single integrated unit. There are also issues surrounding the security of the stand-alone box 130 and the potential maintenance issues raised when guests "tamper" with the stand-alone boxes 130.

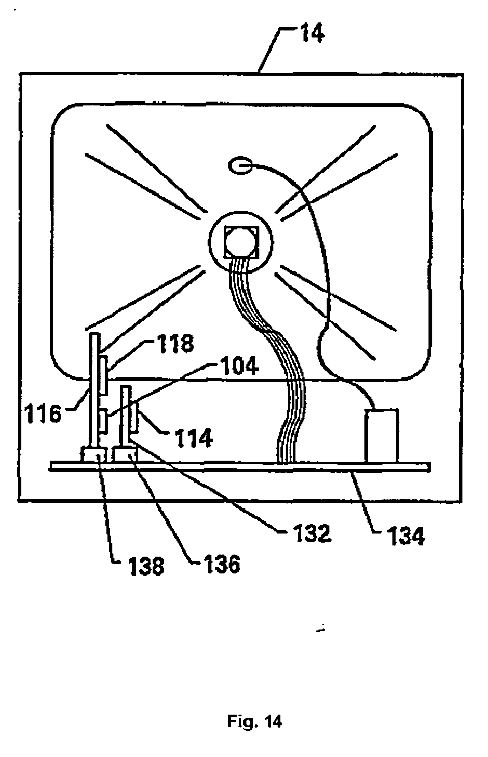

Apart from the obvious aesthetic advantage, mounting the LCU 66 inside the television 14, as shown in Figures 14 and 15 and 16, will simplify the power supply design, using the television's own power supply unit to generate a raw DC supply, and electro-magnetic capability (EMC), using the shielding already inside the television.

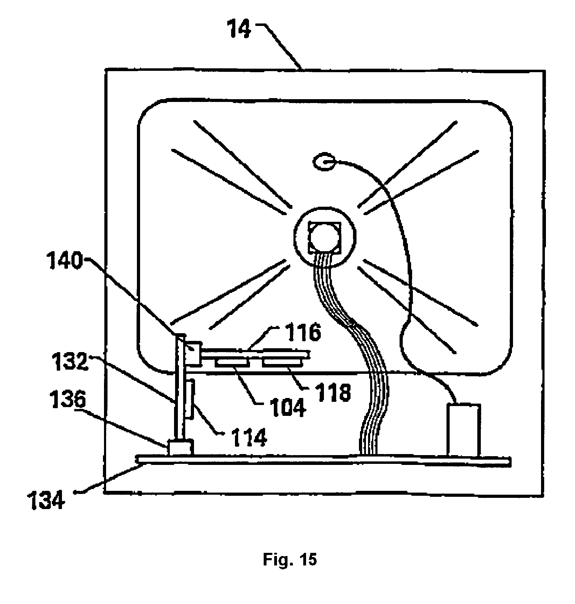

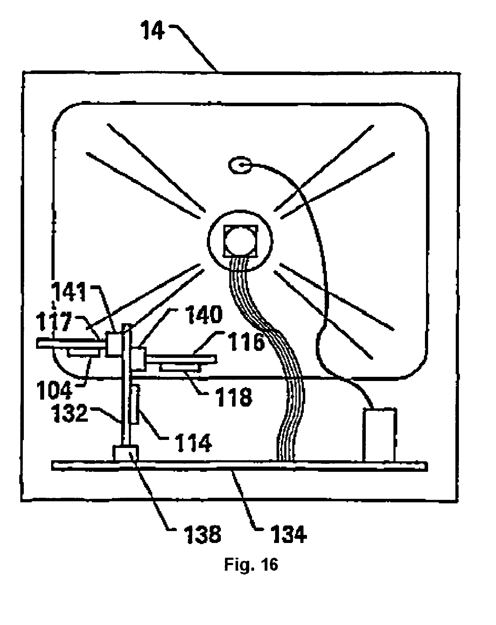

Many of the issues raised by providing the LCU as a stand-alone box can be negated by incorporating the LCU 66 within the television set 14. There is also a significant cost saving from not having to manufacture the casings for the stand-alone boxes. However, to incorporate the LCU 66 within the television set 14 as shown in Figure 14, the chassis 134 would need to provide a slot 138 for the installation of the generic card 116 providing the core functionality of the LCU 66 interfacing with the slot 136 in which the daughter card 132 is installed that transposes the input and output streams from the LCU to a format understood by the television set. Only one type of generic card 116 would be required for all televisions (or three types for the three types of network cabling used), whereas the daughter card 132 would be specific to each make and model of television set 14. Alternatively, as shown in Figure 15, the generic card 116 may be installed in a slot 140 provided on the television-specific card 132. This latter arrangement may be modified as shown in Figure 16 in which the STB chip-set 118 is provided on a first television-generic card 116 installed in a first slot 140 on the television-specific card 132, and the network interface circuit 104 is provided on a second television-generic card 117 installed in a second slot 141 on the television-specific card 132. The card 132 is then specific to the make and model of television set 14, the second television-generic card 117 is generic for different makes and models of television set 14 but is specific to the type of network cabling that is used (e. g. Category 5, telephone or coaxial), and the first television-generic card 116 is completely generic.

While new television sets are built with chassis that support interface cards, older sets may not, so the manufacture of stand-alone boxes 130 may be unavoidable if all situations are to be covered.

Off-the-shelf software products may be used in the LCU 66, including a real-time operating system (RTOS), such as RTOS Red Hat Linux and system software bundled with Red Hat Linux. The chosen RTOS should provide support for the chosen chip-set and the ability to control streaming video. Any chosen RTOS should also support a TCP/IP stack and drivers for the network interface circuit 104. The RTOS controlling the LCU 66 may also provide several auxiliary services, such as:
- Proxy IP Server; to map the IP address of an external computer connected to the LCU 66 to the IP address of the LCU 66
- DHCP Client; for dynamic allocation of an IP address to the LCU 66
- SNMP Client; to send SNMP traps containing diagnostic information to the server 56
- NFS Client; to allow the LCU 66 to connect to a network file system through the server 56
- Digital to Analogue Converter; a service to manage the decompression of an MPEG2 stream from the server 56 and its transposition to an analogue stream that will be routed to the television 14.

Code to control the low-level functionality of the chip sets 118 is best obtained directly from the chip-set manufacturer's reference design. If this can be done it means that the only code that needs to be newly written would be the top-level user interface.

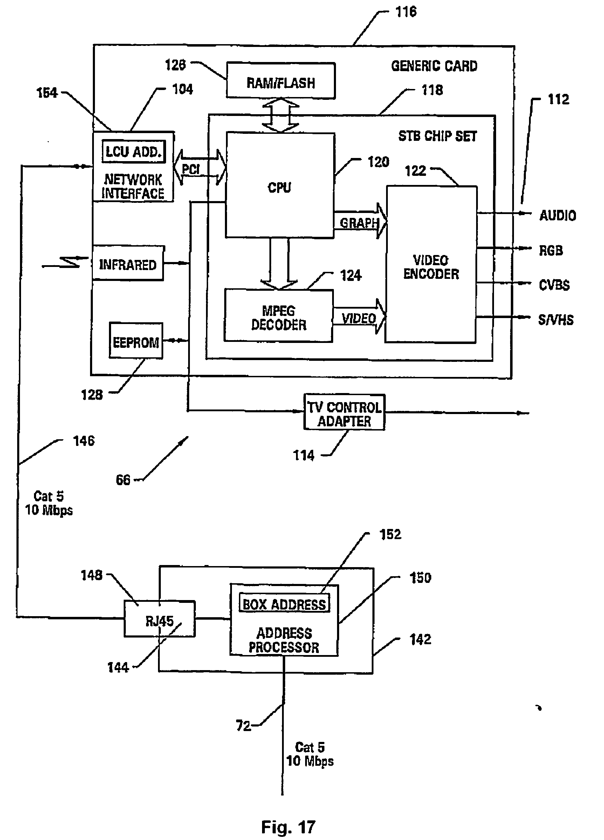

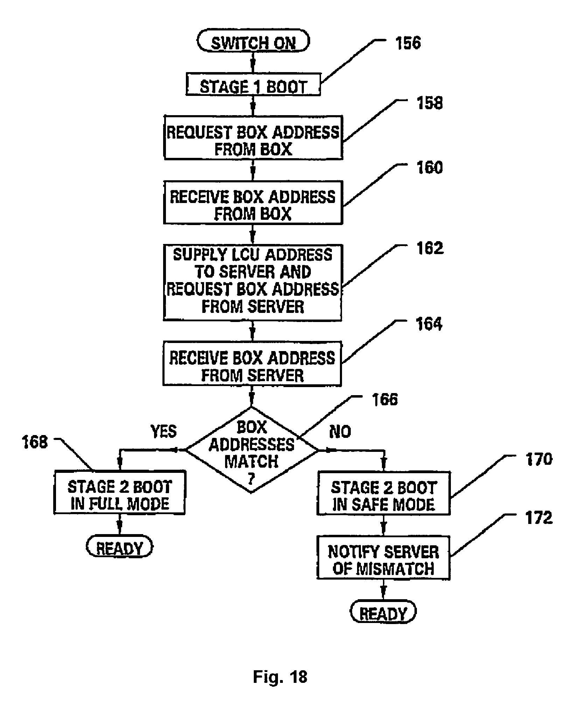

Referring now to Figures 17 and 18, a development of the equipment provided in each room 12 will now be described. Figure 17 shows an LCU 66 similar to that shown in Figure 12 for use in a Category 5 network like that shown in Figure 4.

In addition to the features described with reference to Figure 12, the LCU 66 includes non volatile memory 154 which stores a unique address for the LCU 66.

The Category 5 cable 72 leading to each room 12 is connected to a wall box 142 having a conventional RJ45 socket 144 to which the network interface circuit 104 of the LCU 66 is connected by a Category 5 patch cable having an RJ45 plug 148. An address processor circuit 150 is contained in the wall box 142 and includes non-volatile memory 152 storing a unique address for the wall box 142. The address processor 150 is operable to respond to a request from the LCU 66 by returning the stored wall box address to the LCU 66.

When the system is installed, the system server 56 is set up to store a list of the addresses of all of the wall boxes 142 in the hotel, and when each LCU 66 is installed in a room 12, the address of the LCU 66 is stored in the list on the server 56 against the wall box address for that room 12.

The CPU 120 in each LCU is programmed to perform the boot processes illustrated in Figure 18 when it is powered up. In step 156, the CPU 120 performs some preliminary boot processes. Then, in step 158, the CPU 120 causes a request to be sent to the wall box 142 for the box address stored in the wall box 142, and the address processor 150 in the wall box 142 responds with the address stored in the memory 152. The CPU 120 receives the response in step 160. Then, in step 162, the CPU 120 reads the LCU address stored in the memory 154 and causes a request, including the LCU address, to be sent to the server 56 for the box address stored on the server 56 corresponding to that LCU address, and the server 56 responds with the stored address. The CPU 120 receives the response in step 164. Then, in step 166, CPU 120 determines whether the address received from the address processor 150 in step 160 matches the address received from the server 56 in step 164. If so, then in step 168, the CPU 120 completes the boot processes so that the LCU 66 is fully operational. However, if the addresses do not match, the CPU 120 may perform any of several actions. For example, it may simply power-off, or it may continue booting to a safe mode, as shown in step 170, for example so that it is not operational except to cause a warning or advice message to be displayed on the television, and/or it may cause a message to be sent to the server 56, as shown in step 172, for example including the addresses of the LCU 66 and wall box 142, which may in turn trigger a message to the hotel security guard.

It will therefore be appreciated that an LCU 66 will not fully boot unless it is connected to the wall box 142 designated for that LCU 66 in the list stored on the server 56.

Although the address processor 150 has been described above as being incorporated in a wall box 142 in the particular room 12, it should be noted that other locations are possible, such as at the room ports of the switches68 in Figure 4, at the room outputs of the splitters 42 and amplifiers 44 in Figure 5, at the splitter 98 in Figure10, or in-line in a permanent cable in the room 12.

It should be noted that a similar development may be made to the systems employing coaxial cable or telephone cable.

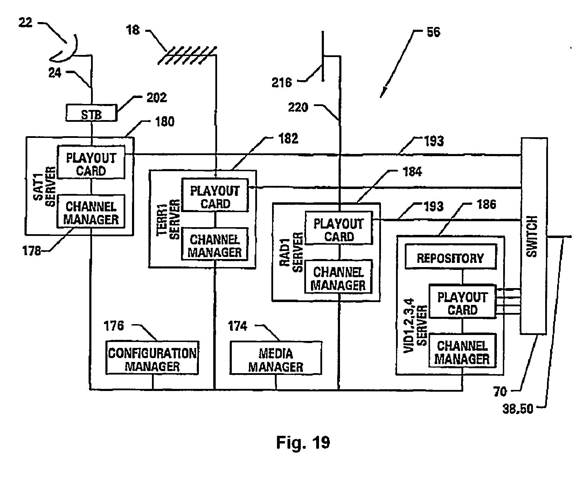

The server 56 will now be described in more detail, also with reference to Figure 19. The server 56 controls the collation and distribution of stream-based media services within a hotel environment. The server 56 provides a number of classes of media content, such as terrestrial television channels, terrestrial radio channels, digital satellite television channels, and pre-digitised media assets (movies).

The server 56 processes these input streams in a variety of formats (analogue, digital, compressed, encrypted, etc.) and outputs digital streams in MPEG-2 format to the switch 70 that supports Internet Group Management Protocol (IGMP). A channel controller uses IGMP to allow LCUs 66 to subscribe to any of the shared stream-based media services. The UDP/IP transport protocol is used for transmitting MPEG-2 streams to the LCU 66.

The server 56 comprises media capture, compression, and streaming functions and includes a media manager 174 that handles media-related events. The media manager 174 collects channel and schedule information from a configuration manager 176 and then passes messages to a specific channel manager 178. These messages detail actions that need to be taken ; for example, loading an asset file, or streaming an asset on a particular card/channel. The configuration manager 176 holds a central repository of system-wide information. This data is used to control many aspects of a particular installation. A subset of the configuration manager database holds information specific to the server 56. This identifies the various servers, the cards that are registered, the channels that have been assigned, the loaded media assets and the overall schedule.

The server architecture supports both live and stored audio and video delivery. Live feeds are converted using specialised digitiser boards, compressed using hardware codecs, split into packets, and encapsulated inside an application transport protocol before final delivery on the network. Stored media files may be held in a compressed format in the media repository. These are loaded locally on the server 56 and are delivered in a similar manner on a scheduled basis.

The system supports the delivery of terrestrial television and radio, satellite television and pre-digitised media streams. Analogue streams, such as local television and radio channels, are captured and compressed prior to distribution. The delivery of analogue or digital television and radio requires efficient data capture and compression. This capability is available through hardware video and audio capture cards 180-184. These cards allow the capture of a variety of analogue and digital streams from television and radio, and the generation of digital streams in MPEG-2 format for video, or MP3 format for audio. However, these cards operate on one specific input channel, and so a single card is provided per channel. The MPEG-2 or MP3 stream that is generated by each card is routed directly to an address and port on the network.

Referring also to Figures 19 to 23, the server may include the following components: television and radio cards 180, 182, 184, 188 that receive analogue RF and satellite signals and convert them to digital signals in MPEG-2 format; television and radio cards 190 that receive digital signals in MPEG-2 format; playout cards 186 that multicast an MPEG-2 or MP3 file over the hotel network; and the software for the server 56, e. g. the channel manager 178, streaming components, etc. The server 56 may, for example, be presented as an 8 unit rack for mounting in a "19 inch" cabinet. Inside the cabinet there are a motherboard, installed on which are a central processing unit and random access memory (e. g. Intel 700MHz processor, 256MB RAM); one or more hard disk drives (e. g. an 18GB hard disk), a PCI bus 191 with 24 slots for the media cards, a 100 Mbps network card 238, power supply and fan. The server uses a DHCP client to request IP addresses for each card installed, and an SNMP client that will report any change in the status of the cards to an SNMP server in the channel controller. Each media card180-190 installed in the server 56 is connected to the IGMP switch 70 by a Category 5 fly lead 193 from the RJ45 port 192 on the card to a port on the switch 70. If more than one server 56 is provided, each server 56 is connected to a hub, so they can communicate with other devices on the network As already described, the switch 70 is connected to the network 38, 50 via its up-link port. The switch supports IGMP and runs at 100 Mbps. The number of ports on the switch 70 and the number of switches will depend on each installation.

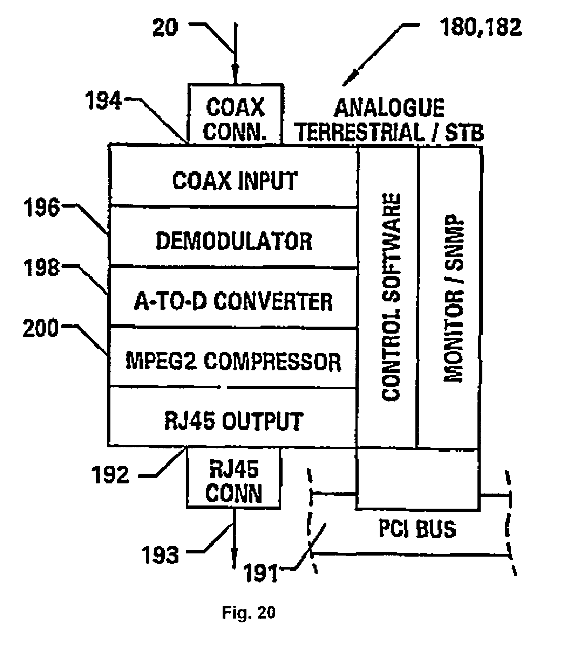

The card 182 used for an analogue terrestrial television channel is shown in Figure 20. One such card 182 is installed in the server 56 per analogue local television channel that the hotel wants to receive. The server 56 uses a DHCP client to request the IP addresses for each card 182 installed. Each card supports an SNMP client that reports any change in the status of the card 182 to the SNMP server. The input port 194 of the first card is connected to the television aerial 18. Additional cards can be added as required to the server 56 and, in this type of environment, a distribution amplifier is used to ensure that the source signal strength is consistent between all cards 82. A hardware failure on one card will not affect the functioning of other cards. The listening frequency of the demodulator 196 on each analogue television card 182 is under software control. The table below tracks the path of the stream sequentially through the analogue television card 182, starting at the television aerial 18 and terminating at the RJ45 output port 192 on the card.

**Table 1**

| Analogue Terrestrial Television Card 182 | | | |
|---|---|---|---|
| Component | Path of Signal | Format | Notes |
| TV aerial system | TV aerial 18 | Analogue, Modulated, Uncompressed | |
| | Coaxial cable 20 | Analogue, Modulated, Uncompressed | |
| Television Card | Coaxial input port 194 | Analogue, Modulated, Uncompressed | |
| | Demodulator 196 | Analogue, Uncompressed | The listening frequency is under software control |
| | Analogue to digital converter 198 | Digital, Uncompressed | |
| | MPEG-2 Compressor 200 | Digital, MPEG-2 | |
| | RJ45 output port 192 | Digital MPEG-2 | An lP address is assigned to the port by a DHCP client on the server 56 |

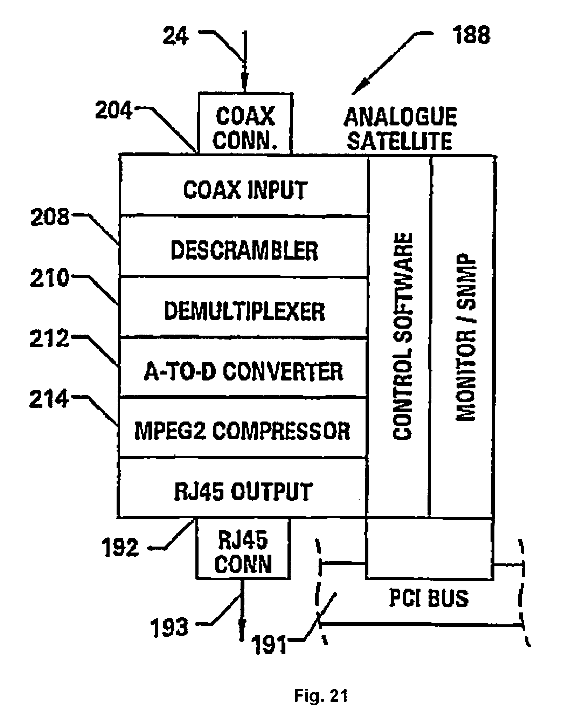

Turning now to the processing that is performed to convert the analogue radio frequency signals on which satellite channels are delivered to the hotel via satellite dish 22 into digital streams in MPEG-2 format, ideally the analogue satellite card 188 (Figure 21) should receive signals directly from the satellite dish, de-scramble these and then select the appropriate channel, and convert the output to an MPEG stream. However, most of the satellite distributors use proprietary software and hardware to ensure that programmes are only received by registered subscribers. As a result, a set-top box 202 is required to receive, decrypt and transmit the required channel as a RF signal. The actual satellite card then becomes identical to the terrestrial TV card 182 (Figure 20). With this approach a set-top box 202 is required for each satellite channel that is to be distributed within the hotel.

One card 180,188 will be installed in the server 56 per satellite channel that the hotel wants to receive. The server 56 uses a DHCP client to request IP addresses for each card 180, 188 installed. Each card 180, 188 supports an SNMP client that reports any change in the status of the card to the SNMP server. The input port 194, 204 of the first card is connected to the coaxial cable from the satellite dish. Additional cards can be added as required to the server 56. Where multiple cards are deployed a distribution amplifier is used to ensure that a consistent source signal strength is available to all cards. A hardware failure on one card will not affect the functioning of other cards. The listening frequency of the demodulator on each analogue satellite receiver card 180, 188 will be under software control. The descrambling algorithms will also be under software control, if possible. The table below tracks the path of the stream sequentially through the analogue satellite receiver card 188, starting at the satellite dish 22 and terminating at the RJ45 output port 192 on the card 188.

**Table 2**

| Analogue Satellite Television Card 188 | | | |
|---|---|---|---|
| Component | Path of Signal | Format | Notes |
| Satellite Receiver System | Satellite dish 22 | Analogue, Scrambled, Multiplexed, Uncompressed | |
| | Coaxial cable 24 | Analogue, Scrambled, Multiplexed, Uncompressed | |
| Satellite Receiver Card | Coaxial input ports 204 | Analogue, Multiplexed, Uncompressed | |
| | Descrambler 208 | Analogue, Uncompressed | The selected channel is under software control |
| | Demultiplexer 210 | Analogue, Uncompressed | |
| | Analogue to digital converter 212 | Digital, Uncompressed | |
| | MPEG-2 Compressor 214 | Digital, MPEG-2 | |
| | RJ45 output port 192 | Digital, MPEG-2 | An IP address is assigned to the port by a DHCP client on the server 56 |

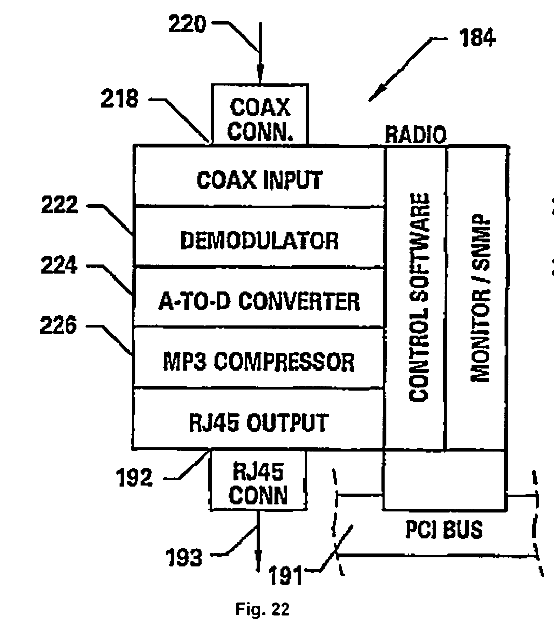

Turning now to the processing that is performed to convert analogue frequency signals on which local radio is delivered to the hotel via a roof-top aerial 216 into digital streams in MPEG-2 format, one card 184 (see also Figure 22) is installed in the server 56 per analogue radio channel that the hotel wants to receive. The server 56 uses a DHCP client to request IP addresses for each card 184 installed. Each card 184 supports an SNMP client that reports any change in the status of the card to the SNMP server. The input port 218 of the first card is connected to the radio aerial lead 220. Additional cards are chained together in serial using coaxial cable. The last card in the series has a terminator installed on the input port. The listening frequency of the demodulator 222 on each analogue radio card 184 is under software control. The table below tracks the path of the stream sequentially through the analogue radio card 184, starting at the radio aerial 216 and terminating at theRJ45 output port 192 on the card 184.

**Table 3**

| Analogue Radio Card 184 | | | |
|---|---|---|---|
| Component | Path of Signal | Format | Notes |
| Radio aerial system | Radio aerial 216 | Analogue, Modulated, Uncompressed | |
| | Coaxial cable 220 | Analogue, Modulated, Uncompressed | |
| Radio Card | Coaxial input port 218 | Analogue, Modulated, Uncompressed | |
| | Demodulator 222 | Analogue, Uncompressed | The listening frequency is under software control |
| | Analogue to digital converter 224 | Digital, Uncompressed | |
| | MP3 Compressor 226 | Digital, MP3 | |
| | RJ45 output port 192 | Digital, MP3 | An IP address is assigned to the port by a DHCP client on the server 56 |

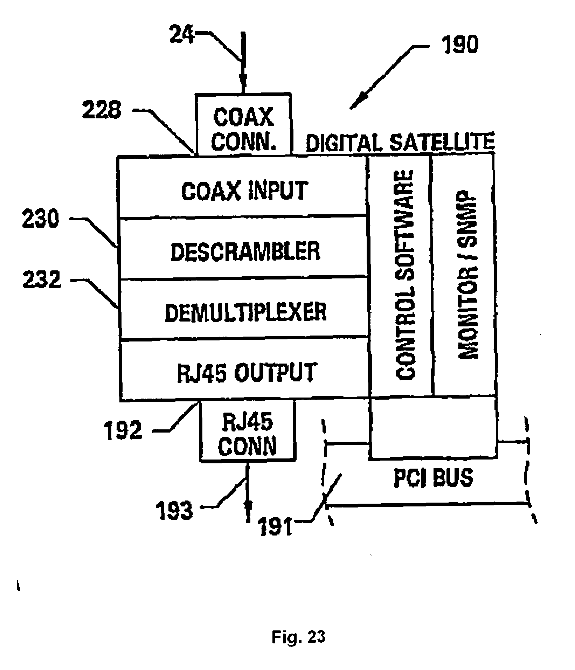

In the case of the reception of digital satellite television, a card 190 (Figure 23) may be employed having a descrambler 230 and demultiplexer 232. The table below tracks the path of the stream sequentially through the digital satellite television card 190, starting at the satellite dish 22 and terminating at the RJ45 output port 192 on the card 190.

**Table 4**

| Digital Satellite Television Card 190 | | | |
|---|---|---|---|
| Component | Path of Signal | Format | Notes |
| Satellite Receiver System | Satellite dish 22 | Digital, Scrambled, Multiplexed, MPEG-2 | |
| | Coaxial cable 24 | Digital, Scrambled, Multiplexed, MPEG-2 | |
| Satellite receiver Card | Coaxial input port 228 | Digital, Scrambled, Multiplexed, MPEG-2 | |
| | Descrambler 230 | Digital, Multiplexed, MPEG-2 | |
| | Demultiplexer 232 | Digital, MPEG-2 | The selected channel is under software control |
| | RJ45 output port 192 | Digital, MPEG-2 | An IP address is assigned to the port by a DHCP client on the server 56 |

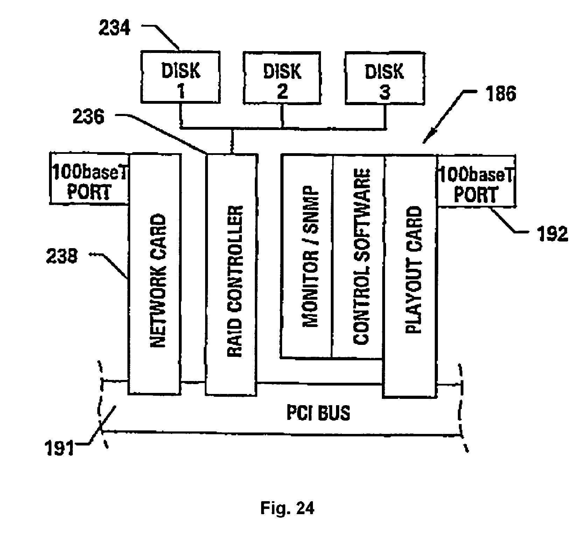

The play-out cards 186 that store MPEG-2 files on the server 56 and stream these files within the hotel will now be described, also with reference to Figure 24. The playout cards 186 stream stored MPEG-2 files over the hotel network infrastructure. The play-out cards 186 have the same delivery capability as the other cards 180-184. Each of these cards shares the same on-board "packetisation" and delivery software. However, the play-out card 186 differs in two respects: it performs no MPEG-2 encoding and it supports the delivery of multiple channels.

The server 56 is configured with the following components: three or more 18 GB (min.) wide SCSI hard disk drives 234; a RAID 5 disk controller card 236; and a100BaseT network card 238.

When the media manager 174 notifies the channel manager on the server 56 to start playing a particular media asset (film) it instructs the play-out card 186 to load and process a local copy of the file and stream this direct through its 100 BaseT network port 192. This will in turn connect to the IGMP switch 70, so that LCUs 66 associated with the appropriate IGMP group will receive the MPEG-2 stream. The local disk array 234 holds the required films asMPEG-2 format files. The server 56 uses a DHCP client to request lP addresses for each network component installed. Each card supports an SNMP client that reports any change in the status of the card to the SNMP server. The following parameters will be under software control: the full filename and path for the media assets; the channels associated with each card; and the asset to be streamed on a particular channel. The table below tracks the path of the stream sequentially through the server when the asset is played.

**Table 5**

| Media Play-out | | | |
|---|---|---|---|
| Component | Path of Signal | Format | Notes |
| Media server | Disk drive 234 | Digital, MPEG-2 | The server is notified to stream a particular asset on a defined channel. The play-out card 186 is notified that a specific file is to be opened and streamed. |
| | RJ45 output port | Digital, MPEG-2 | An IP address is assigned to the port by a DHCP client on the server 56. |

The embodiments described above provide for the descrambling of any signals received in scrambled form at the server 56. These signals are then passed to the LCU 66 in an unscrambled form. In other embodiments, scrambled signals may be sent to the LCU 66, where they are descrambled.

In a first such embodiment, scrambled signals received by the server 56 are sent to the LCU 66 in the same scrambled form in which are received. In a second embodiment, any signals received by the server may be scrambled by the server if required and sent to the LCU 66 in scrambled form. This includes the possibility of signals being received by the server 56 in a first scrambled form, being descrambled by the server and then being re-scrambled and passed to the LCU 66 in a second scrambled form. This latter example has the advantage of requiring only one descrambling method to be implemented within the LCU 66 regardless of how the signals originally received by the server 56 have been scrambled. Sending the signals to the LCU in scrambled form may prevent unauthorised access to the transmitted information.

Scrambling and descrambling should herein be understood to include any method of encryption and decryption of analogue or digital signals.

In any or all of the aforementioned, certain features of the present invention have been implemented using computer software. However, it will of course be clear to the skilled man that any of these features may be implemented using hardware or a combination of hardware and software. Furthermore, it will be readily understood that the functions performed by the hardware, the computer software, and such like are performed on or using electrical and like signals.

Features which relate to the storage of information may be implemented by suitable memory locations or stores. Features which relate to the processing of information may be implemented by a suitable processor or control means, either in software or in hardware or in a combination of the two.

Analogous method steps to the apparatus features described herein are provided within the scope of the invention, and vice versa. In any or all of the aforementioned, different features and aspects described above, including method and apparatus features and aspects, may be combined in any appropriate fashion.

It will be understood that the present invention (s) has been described above purely by way of example, and modifications of detail can be made within the scope of the invention.

Each feature disclosed in the description, and (where appropriate) the claims and drawings may be provided independently or in any appropriate combination.

## Claims

1. A system for distributing audio/visual (AV) signals to different locations, the system comprising a server capable of providing digital AV signals for a plurality of programmes, a plurality of receivers each at a respective location, and a network connecting the server to the receivers, each receiver being operable to select a required one of the programmes and to communicate the selection to the server, the server being responsive to such a selection to transmit the digital AV signal for the selected programme over the network addressed to the receiver that selected that programme, and each receiver being responsive to the AV signal that is addressed to that receiver so that point to-point communication is established from the server to that receiver.

2. A system as claimed in claim 1, wherein at least part of a cable run of the network from the server to the receivers is provided by twisted-pair cable.

3. A system as claimed in claim 2, wherein at least part of the cable run is provided by telephone-grade twisted-pair cable.

4. A system as claimed in claim 2 or 3, wherein the twisted-pair cable has less than four twisted pairs.

5. A system as claimed in any preceding, further comprising a telephone connected by a first splitter to the network adjacent a respective receiver, and a telephone exchange connected by a second splitter to the network remote from the respective receiver.

6. A system as claimed claim 1, wherein at least part of a cable run of the network from the server to the receivers is provided by a conductor arranged to carry the digital AV signals for those receivers, those signals being provided on respective channels each allocated to a respective one of the receivers, and each receiver being tuned to its respective channel.

7. A system as claimed in claim 6, wherein the conductor is coaxial cable.

8. A system as claimed in claim 7, wherein each of the receivers is connected to the coaxial cable via a cable modem whose tuning is preset to the channel allocated to the respective receiver.

9. A system as claimed in claim 8, wherein the server is connected to the coaxial cable via a cable modem that is controlled by the server to place the AV signal for the programme selected for each receiver on the channel allocated to that receiver.

10. A system as claimed in any preceding claim, further comprising means for receiving or generating analogue AV signals and means for converting the analogue signals to digital AV signals and supplying the digital AV signals to the server, wherein each receiver includes means for converting the digital AV signals to analogue AV signals for supply to a display device.

11. A receiver for use in a system as claimed in any preceding claims, the receiver comprising means for enabling connection to the server by means of the network, means for selecting a required programme, and means for communicating the selection to the server, the receiver being responsive to a digital AV signal that is transmitted by the server over the network and addressed to that receiver so that point-to-point communication is established from the server to that receiver.

12. A receiver as claimed in claim 11, wherein the receiver is tuned to a given channel.

13. A receiver as claimed in claim 11 or 12, further comprising means for converting the digital AV signals to analogue signals for supply to a display device.

14. A receiver as claimed in claim 13, wherein the digital to analogue converting means includes means for decompressing the digital signals.

15. A method of distributing AV signals to different locations, comprising: receiving or generating analogue AV signals, converting the analogue AV signals to digital AV signals, supplying the digital AV signals to a server, transmitting the digital signals corresponding to AV programmes over a network to receivers at the locations, and, at each receiver, converting the digital signal AV to an analogue signal and reproducing the analogue AV signal on a display device, each receiver selecting a required programme and communicating the selection to the server, the server responding to such a selection and transmitting the digital AV signal for the selected programme over the network addressed to the receiver that selected that programme, and each receiver responding to the digital AV signal that is addressed to that receiver so that

16. A method as claimed in claim 15, wherein the various steps are performed using a system as claimed in any of claims 1-14.
